# EUROPÄISCHE PATENTSCHRIFT

(11) **EP 2 440 641 B1**
(45) Veröffentlichungstag und Bekanntmachung des Hinweises auf die Patenterteilung: **21.01.2015**
(21) Anmeldenummer: 10721511.3
(22) Anmeldetag: 28.05.2010
(51) Int. Cl.: C11D 3/16, C11D 3/37, C11D 3/39, C01G 45/02, B82Y 30/00

(54) **NANOPARTIKULÄRES MANGANDIOXID**
NANOPARTICULATE MANGANESE DIOXIDE
DIOXYDE DE MANGANÈSE NANOPARTICULAIRE

(30) Priorität: 08.06.2009 DE 102009026810
(43) Veröffentlichungstag der Anmeldung: 18.04.2012
(73) Patentinhaber: Henkel AG & Co. KGaA, 40589 Düsseldorf (DE)
(72) Erfinder: HÄTZELT, André, 40591 Düsseldorf (DE); NORDSKOG, Anette, N-3237 Sandefjord (NO); RYBINSKI VON, Wolfgang, 40593 Düsseldorf (DE); ERPENBACH, Siglinde, 40789 Monheim (DE); BALLAUFF, Matthias, 95444 Bayreuth (DE); POLZER, Frank, 95444 Bayreuth (DE)
(86) Internationale Anmeldenummer: PCT/EP2010/057417
(87) Internationale Veröffentlichungsnummer: WO 2010/142539

(56) Entgegenhaltungen:
- WO-A1-01/45842
- US-A- 4 620 935
- GEETA SHARMA ET AL: "Cationic Spherical Polyelectrolyte Brushes as Nanoreactors for the Generation of Gold Particles" MACROMOLECULAR: RAPID COMMUNICATIONS, WILEY VCH VERLAG, WEINHEIM, DE, Bd. 25, Nr. 4, 1. Februar 2004 (2004-02-01), Seiten 547-552, XP009098422 ISSN: 1022-1336
- LUO ET AL: "Preparation of MnO2 nanoparticles by directly mixing potassium permanganate and polyelectrolyte aqueous solutions" MATERIALS LETTERS, NORTH HOLLAND PUBLISHING COMPANY. AMSTERDAM, NL LNKD- DOI:10.1016/J.MATLET.2006.07.165, Bd. 61, Nr. 8-9, 12. März 2007 (2007-03-12), Seiten 1893-1895, XP005922096 ISSN: 0167-577X

## Beschreibung

Die vorliegende Erfindung betrifft ein Verfahren zur Herstellung von sphärischen Polyelektrolyt-Bürsten (SPB), die nanopartikuläres MnO₂ kolloidal gebunden enthalten, die Verwendung von SPB zur Stabilisierung von nanopartikulärem MnO₂, ein entsprechend stabilisiertes nanopartikuläres MnO₂ sowie seine Verwendung als Katalysator in Oxidationsreaktionen, insbesondere zur Verstärkung der Reinigungsleistung von Wasch- und Reinigungsmitteln.

Materialien mit Teilchengrößen im Bereich von Nanometern sind wegen ihrer außergewöhnlichen physikalischen Eigenschaften interessant geworden; sie versprechen Anwendung in Photonik, Elektronik und Katalyse. Die überragenden Eigenschaften solcher Materialien beruhen auf ihrer elektronischen Struktur und des großen Verhältnisses von ihrer Oberfläche zu ihrem Volumen, das sich im Wesentlichen auf ihre Größe zurückführen lässt. Manganoxid-Nanostrukturen wurden als mögliche Materialien für Elektroden, Ionensiebe, Sensoren, Magnete und Katalysatoren diskutiert, wobei unter den Manganoxiden das MnO₂ wegen seiner Vielzahl von polymorphen Strukturen von besonderem Interesse ist. Die Eigenschaften von nanostrukturiertem MnO₂ hängen von seiner Morphologie und strukturellen Form, wie beispielsweise dem α-, β-, γ-, δ- oder amorphen Typ, ab, die sich wegen unterschiedlicher Verknüpfungen ihrer Basis-Struktur, des [MnO₆]-Oktaeders, voneinander unterscheiden.

Bekannte Verfahren zur Herstellung von kleinstteiligem MnO₂ ergeben Teilchen mit mittleren Größen im Bereich von 40 nm bis über 1 µm. Insbesondere für katalytische Anwendungen ist man jedoch bestrebt, möglichst kleine Teilchen bereitzustellen, so dass sich ein möglichst großes Verhältnis von Oberfläche zu Volumen und eine möglichst große spezifische Oberfläche ergeben. Ein weiterer wesentlicher Aspekt besteht in der Stabilisierung der Nanopartikel in Flüssigkeiten gegenüber Koagulation, wobei jedoch die aktiven Zentren der nanopartikulären Katalysatoren nicht durch Stabilisatoren, wie beispielsweise Tenside, blockiert werden dürfen. Ein Belegen der Oberfläche eines Nanopartikels mit einem stabilisierenden Wirkstoff beeinflusst seine katalytische Aktivität wegen der Hinderung der Adsorption von Reaktanden an die Oberfläche in negativer Weise.

Überraschenderweise wurde nun gefunden, dass sich amorphe MnO₂-Nanopartikel auf einfache Weise erzeugen und in einer ihre Oberfläche nicht blockierenden Weise kolloidal stabilisieren lassen, wenn man wässrige Lösungen, die Mangan in einer höheren Oxidationsstufe als +IV erhalten, mit einer ammonium-funktionalisierten sphärischen Polyelektrolyt-Bürste (SPB) in Kontakt bringt. Das höher oxidierte Mangan, welches beispielsweise in Form eines MnO₄-Anions mit üblichen Gegenkationen wie K oder Na vorliegen kann, wird durch die Ammoniumgruppen in den aufgepfropften Seitenketten der sphärischen Polyelektrolyt-Bürste zum vierwertigen Mangan reduziert, ohne dass es der Anwesenheit eines weiteren Reduktionsmittels bedarf.

Ein erster Gegenstand der Erfindung ist daher ein Verfahren zur Herstellung von sphärischen Polyelektrolyt-Bürsten (SPB), die nanopartikuläres MnO₂ kolloidal gebunden enthalten, wobei man Mangan in einer höheren Oxidationsstufe als +IV in wässriger Lösung mit einer ammoniumfunktionalisierten sphärischen Polyelektrolyt-Bürste (SPB) in Kontakt bringt.

Dabei liegt das Molverhältnis zwischen der Anzahl funktioneller Gruppen in der Polyelektrolyt-Hülle zu zugefügtem Mn vorzugsweise im Bereich von 100:1 bis 2:3, insbesondere im Bereich von 2:1 bis 1:1.

Das erfindungsgemäße Herstellverfahren wird vorzugsweise bei Temperaturen im Bereich von 10 °C bis 70 °C, insbesondere von 20 °C bis 25 °C durchgeführt. In weiteren bevorzugten Ausführungsformen des Herstellverfahrens wird es bei pH-Werten im Bereich von pH 4 bis pH 10, insbesondere pH 5 bis pH 8, die durch Zugabe üblicher systemverträglicher Säuren oder Laugen eingestellt werden können, durchgeführt. Vorzugsweise legt man die ammonium-funktionalisierte sphärische Polyelektrolyt-Bürste vor und gibt die Mangan-Verbindung zu, wobei deren Dosierzeit in der Regel bei 10 Minuten bis 1 Stunde, insbesondere etwa 30 Minuten, liegt, aber, insbesondere bei kleinen Mengen, auch weniger als 1 s betragen kann, oder zum Beispiel bei Verwendung von kontrolliertem Ionenaustausch über Ultrafiltration auch gegen Unendlich gehen kann. Nach Beendigung der Zugabe der Mangan-Verbindung lässt man vorzugsweise noch 30 Minuten bis 48 Stunden, insbesondere 1 Stunde bis 24 Stunden, vorzugsweise unter Rühren, nachreagieren.

Durch das Herstellverfahren erhält man drahtförmige MnO₂-Nanopartikel mit typischen Längen von 5 nm bis 30 nm und typischen Durchmessern von 1 nm bis 3 nm, die in die aufgepfropften Polyelektrolyt-Seitenketten der sphärischen Polyelektrolyt-Bürste eingebettet sind und so stabilisiert sind. Dabei ist die Partikeloberfläche für Substrate weiterhin gut zugänglich.

Weitere Gegenstände der Erfindung sind die Verwendung von sphärischen Polyelektrolyt-Bürsten (SPB) zur Stabilisierung von nanopartikulärem MnO₂, und ein durch sphärische Polyelektrolyt-Bürsten (SPB) stabilisiertes nanopartikuläres MnO₂.

Die ammonium-funktionalisierte sphärische Polyelektrolyt-Bürste besitzt vorzugsweise einen festen Polymerkern, beispielsweise aus Polystyrol oder Polymethylmethacrylat. Darauf können Alkanolammoniumester beziehungsweise Mono-, Di- oder Trialkyl-Alkanolammoniumester ethylenisch ungesättigter Säuren wie Acrylsäure und/oder Methacrylsäure, beispielsweise 2-Aminoethylmethacrylat-hydrochlorid oder 2-Trimethylammoniumethyl-methacrylat, wobei die Ammoniumgruppen übliche Gegenanionen wie beispielsweise Chlorid aufweisen, aufgepfropft worden sein. Die Herstellung von ammonium-funktionalisierten sphärischen Polyelektrolyt-Bürsten ist zum Beispiel in Macromol. Rapid Commun., 24, 2004, S. 547-552 beschrieben.

Ein weiterer Gegenstand der Erfindung betrifft die Verwendung von durch sphärische Polyelektrolyt-Bürsten (SPB) stabilisiertem nanopartikulärem MnO₂ als Katalysator in Oxidationsreaktionen. Darunter sind insbesondere auch Oxidationsreaktionen, die in Wasch- beziehungsweise Reinigungsprozessen durch den Angriff von Persauerstoffverbindungen auf Anschmutzungen stattfinden, die sich auf einem zu waschenden Textil beziehungsweise einer zu reinigenden harten Oberfläche befinden. Das durch sphärische Polyelektrolyt-Bürsten (SPB) stabilisierte nanopartikuläre MnO₂ wird vorzugsweise zur Verstärkung der Reinigungsleistung von Wasch- oder Reinigungsmitteln in wässriger, insbesondere tensidhaltiger Flotte verwendet.

Im Zusammenhang mit diesem letztgenannten Erfindungsaspekt sind ein Wasch- oder Reinigungsmittel, welches dadurch gekennzeichnet ist, dass es durch sphärische Polyelektrolyt-Bürsten (SPB) stabilisiertes nanopartikuläres MnO₂ neben üblichen damit verträglichen Inhaltsstoffen enthält, sowie Verfahren zum Waschen von Textilien oder zum Reinigen harter Oberflächen, insbesondere zum maschinellen Reinigen von Geschirr, unter Einsatz von durch sphärische Polyelektrolyt-Bürsten (SPB) stabilisiertem nanopartikulärem MnO₂ weitere Gegenstände der Erfindung.

Anorganische Persauerstoffverbindungen, insbesondere Wasserstoffperoxid und feste Persauerstoffverbindungen, die sich in Wasser unter Freisetzung von Wasserstoffperoxid lösen, wie Natriumperborat und Natriumcarbonat-Perhydrat, werden seit langem als Oxidationsmittel zu Desinfektions- und Bleichzwecken verwendet. Die Oxidationswirkung dieser Substanzen hängt in verdünnten Lösungen stark von der Temperatur ab; so erzielt man beispielsweise mit H₂O₂ oder Perborat in alkalischen Bleichflotten erst bei Temperaturen oberhalb von etwa 80 °C eine ausreichend schnelle Bleiche verschmutzter Textilien. Bei niedrigeren Temperaturen kann die Oxidationswirkung der anorganischen Persauerstoffverbindungen durch Zusatz so genannter Bleichaktivatoren verbessert werden, die in der Lage sind, unter den angesprochenen Perhydrolysebedingungen Peroxocarbonsäuren zu liefern und für die zahlreiche Vorschläge, vor allem aus den Stoffklassen der N- oder O-Acylverbindungen, beispielsweise reaktive Ester, mehrfach acylierte Alkylendiamine, insbesondere N,N,N',N'-Tetraacetylethylendiamin (TAED), acylierte Glykolurile, insbesondere Tetraacetylglykoluril, N-acylierte Hydantoine, Hydrazide, Triazole, Hydrotriazine, Urazole, Diketopiperazine, Sulfurylamide und Cyanurate, außerdem Carbonsäureanhydride, insbesondere Phthalsäureanhydrid, Carbonsäureester, insbesondere Natrium-nonanoyloxy-benzolsutfonat (NOBS), Natrium-isononanoyloxy-benzolsulfonat, O-acylierte Zuckerderivate, wie Pentaacetylglukose, und N-acylierte Lactame, wie N-Benzoylcaprolactam, in der Literatur bekannt geworden sind. Durch Zusatz dieser Substanzen kann die Bleichwirkung wässriger Peroxidflotten so weit gesteigert werden, dass bereits bei Temperaturen um 60 °C im Wesentlichen die gleichen Wirkungen wie mit der Peroxidflotte allein bei 95 °C eintreten. Im Bemühen um energiesparende Wasch- und Bleichverfahren gewinnen in den letzten Jahren zudem Anwendungstemperaturen noch deutlich unterhalb 60 °C, insbesondere unterhalb 45 °C bis herunter zur Kaltwassertemperatur an Bedeutung. Bei diesen niedrigen Temperaturen lässt die Wirkung der bisher bekannten Aktivatorverbindungen in der Regel erkennbar nach. Es hat deshalb nicht an Bestrebungen gefehlt, für diesen Temperaturbereich wirksamere Aktivatoren zu entwickeln. Verschiedentlich ist auch der Einsatz von Übergangsmetallverbindungen, insbesondere Übergangsmetallkomplexen, zur Steigerung der Oxidationskraft von Persauerstoffverbindungen oder auch Luftsauerstoff in Wasch- und Reinigungsmitteln vorgeschlagen worden.

Im Rahmen der erfindungsgemäßen Verwendung und des erfindungsgemäßen Wasch- beziehungsweise Reinigungsverfahrens ist bevorzugt, wenn die Konzentration des durch SPB stabilisierten nanopartikulären MnO₂ (berechnet als Mn) in der wässrigen Wasch- beziehungsweise Reinigungsflotte 0,1 µmol/l bis 100 µmol/l, insbesondere 0,5 µmol/l bis 90 µmol/l beträgt. Bevorzugte Persauerstoffkonzentrationen (berechnet als H₂O₂) in der Wasch- beziehungsweise Reinigungsflotte liegen im Bereich von 0,001 g/l bis 10 g/l, insbesondere 0,1 g/l bis 1 g/l. Die erfindungsgemäße Verwendung und das erfindungsgemäße Verfahren wird vorzugsweise bei Temperaturen im Bereich von 10 °C bis 95 °C, insbesondere 20 °C bis 40 °C durchgeführt. Die Wasserhärte des zur Zubereitung der wässrigen Wasch- beziehungsweise Reinigungsflotte zum Einsatz kommenden Wassers ist unkritisch, sie kann beispielsweise im Bereich von 0°dH bis 31°dH, insbesondere 0°dH bis 21°dH liegen. Die erfindungsgemäße Verwendung und das erfindungsgemäße Verfahren wird vorzugsweise bei pH-Werten im Bereich von pH 7 bis pH 12, insbesondere von pH 9 bis pH 11 durchgeführt.

Die erfindungsgemäßen Verwendungen beziehungsweise die erfindungsgemäßen Verfahren können besonders einfach durch den Einsatz eines Wasch- oder Reinigungsmittels, das durch SPB stabilisiertes nanopartikuläres MnO₂ enthält, realisiert werden. Waschmittel zur Reinigung von Textilien und Mittel zur Reinigung harter Oberflächen, insbesondere Geschirrspülmittel und unter diesen vorzugsweise solche für den maschinellen Einsatz, die durch SPB stabilisiertes nanopartikuläres MnO₂ neben üblichen damit verträglichen Inhaltsstoffen enthalten, sind daher weitere Gegenstände der Erfindung. Obgleich der erfindungsgemäße Erfolg sich bereits bei Anwesenheit von Luftsauerstoff als alleinigem Oxidationsmittel einstellt, kann die erfindungsgemäße Verwendung beziehungsweise das erfindungsgemäße Verfahren auch in Gegenwart von persauerstoffhaltigem Bleichmittel vorgenommen werden beziehungsweise ein erfindungsgemäßes Mittel kann zusätzlich auch persauerstoffhaltiges Bleichmittel enthalten. Vorzugsweise ist in erfindungsgemäßen Mitteln 0,001 Gew.-% bis 2 Gew.-%, insbesondere 0,01 Gew.-% bis 1 Gew.-% durch SPB stabilisiertes nanopartikuläres MnO₂ enthalten.

Als in den Mitteln gegebenenfalls enthaltene Persauerstoffverbindungen kommen insbesondere organische Persäuren beziehungsweise persaure Salze organischer Säuren, wie Phthalimidopercapronsäure, Perbenzoesäure oder Salze der Diperdodecandisäure, Wasserstoffperoxid und unter den Waschbedingungen Wasserstoffperoxid abgebende anorganische Salze, wie Perborat, Percarbonat und/oder Persilikat, in Betracht. Wasserstoffperoxid kann dabei auch mit Hilfe eines enzymatischen Systems, das heißt einer Oxidase und ihres Substrats, erzeugt werden. Sofern feste Persauerstoffverbindungen eingesetzt werden sollen, können diese in Form von Pulvern oder Granulaten verwendet werden, die auch in im Prinzip bekannter Weise umhüllt sein können. Besonders bevorzugt wird Alkalipercarbonat, Alkaliperborat-Monohydrat, Alkaliperborat-Tetrahydrat oder Wasserstoffperoxid in Form wässriger Lösungen, die 3 Gew.-% bis 10 Gew.-% Wasserstoffperoxid enthalten, eingesetzt. Vorzugsweise sind Persauerstoffverbindungen in Mengen von bis zu 50 Gew.-%, insbesondere von 5 Gew.-% bis 30 Gew.-%, in erfindungsgemäßen Wasch- oder Reinigungsmitteln vorhanden.

Die erfindungsgemäßen Mittel, die als insbesondere pulverförmige Feststoffe, in nachverdichteter Teilchenform, als homogene Lösungen oder Suspensionen vorliegen können, können außer dem erfindungsgemäß zu verwendenden durch SPB stabilisierten nanopartikulären MnO₂ im Prinzip alle bekannten und in derartigen Mitteln üblichen Inhaltsstoffe enthalten. Die erfindungsgemäßen Mittel können insbesondere Buildersubstanzen, oberflächenaktive Tenside, wassermischbare organische Lösungsmittel, Enzyme, Sequestrierungsmittel, Elektrolyte, pH-Regulatoren, Polymere mit Spezialeffekten, wie soil release-Polymere, Farbübertragungsinhibitoren, Vergrauungsinhibitoren, knitterreduzierende polymere Wirkstoffe und formerhaltende polymere Wirkstoffe, und weitere Hilfsstoffe, wie optische Aufheller, Schaumregulatoren, zusätzliche Persauerstoff-Aktivatoren, Farb- und Duftstoffe enthalten.

Ein erfindungsgemäßes Mittel kann zur Verstärkung der Desinfektionswirkung, beispielsweise gegenüber speziellen Keimen, zusätzlich zu den bisher genannten Inhaltsstoffen übliche antimikrobielle Wirkstoffe enthalten. Derartige antimikrobielle Zusatzstoffe sind in den erfindungsgemäßen Desinfektionsmitteln vorzugsweise in Mengen bis zu 10 Gew.-%, insbesondere von 0,1 Gew.-% bis 5 Gew.-%, enthalten.

Zusätzlich zu dem erfindungsgemäß zu verwendenden durch SPB stabilisierten nanopartikulären MnO₂ können übliche Bleichaktivatoren, die unter Perhydrolysebedingungen Peroxocarbonsäuren oder Peroxoimidsäuren bilden, und/oder übliche die Bleiche aktivierende Übergangsmetallkomplexe eingesetzt werden. Die fakultativ, insbesondere in Mengen von 0,5 Gew.-% bis 6 Gew.-%, vorhandene Komponente der Bleichaktivatoren umfasst die üblicherweise verwendeten N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Urazole, Diketopiperazine, Sulfurylamide und Cyanurate, außerdem Carbonsäureanhydride, insbesondere Phthalsäureanhydrid, Carbonsäureester, insbesondere Natriumisononanoyl-phenolsulfonat, und acylierte Zuckerderivate, insbesondere Pentaacetylglukose, sowie kationische Nitrilderivate wie Trimethylammoniumacetonitril-Salze. Die Bleichaktivatoren können zur Vermeidung der Wechselwirkung mit den Perverbindungen bei der Lagerung in bekannter Weise mit Hüllsubstanzen überzogen beziehungsweise granuliert worden sein, wobei mit Hilfe von Carboxymethylcellulose granuliertes Tetraacetylethylendiamin mit mittleren Korngrößen von 0,01 mm bis 0,8 mm, granuliertes 1,5-Diacetyl-2,4-dioxohexahydro-1,3,5-triazin, und/oder in Teilchenform konfektioniertes Trialkylammoniumacetonitril besonders bevorzugt ist. In Wasch- oder Reinigungsmitteln sind derartige Bleichaktivatoren vorzugsweise in Mengen bis zu 8 Gew.-%, insbesondere von 2 Gew.-% bis 6 Gew.-%, jeweils bezogen auf gesamtes Mittel, enthalten.

Die erfindungsgemäßen Mittel können ein oder mehrere Tenside enthalten, wobei insbesondere anionische Tenside, nichtionische Tenside und deren Gemische in Frage kommen, aber auch kationische und/oder amphotere tenside enthalten sein können. Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomem im Alkylrest brauchbar.

Geeignete anionische Tenside sind insbesondere Seifen und solche, die Sulfat- oder Sulfonat-Gruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Derartige Tenside sind in den erfindungsgemäßen Waschmitteln in Mengenanteilen von vorzugsweise 5 Gew.-% bis 50 Gew.-%, insbesondere von 8 Gew.-% bis 30 Gew.-%, enthalten, während die erfindungsgemäßen Desinfektionsmittel wie auch erfindungsgemäße Reinigungsmittel vorzugsweise 0,1 Gew.-% bis 20 Gew.-%, insbesondere 0,2 Gew.-% bis 5 Gew.-% Tenside, enthalten.

Die erfindungsgemäßen Mittel, insbesondere wenn es sich bei ihnen um solche handelt, die für die Behandlung von Textilien vorgesehen sind, können als kationische Aktivsubstanzen mit textilweichmachender Wirkung insbesondere einen oder mehrere der kationischen, textilweichmachenden Stoffe der allgemeinen Formeln X, XI oder XII enthalten: 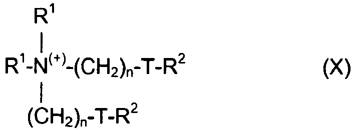 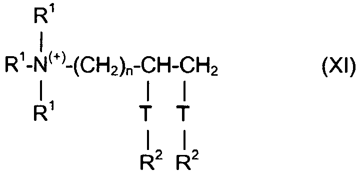 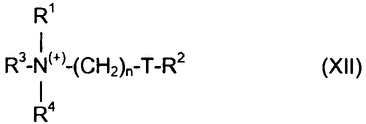 worin jede Gruppe R¹ unabhängig voneinander ausgewählt ist aus C₁₋₆-Alkyl-, -Alkenyl- oder -Hydroxyalkylgruppen; jede Gruppe R² unabhängig voneinander ausgewählt ist aus C₈₋₂₈-Alkyl- oder -Alkenylgruppen; R³ = R¹ oder (CH₂)ₙ-T-R²; R⁴ = R¹ oder R² oder (CH₂)ₙ-T-R²; T = -CH₂-, -O-CO- oder -CO-O- und n eine ganze Zahl von 0 bis 5 ist. Die kationischen Tenside weisen übliche Anionen in zum Ladungsausgleich notwendiger Art und Anzahl auf, wobei diese neben beispielsweise Halogeniden auch aus den anionischen Tensiden ausgewählt werden können. In bevorzugten Ausführungsformen der vorliegenden Erfindung kommen als kationische Tenside Hydroxyalkyl-trialkyl-ammonium-verbindungen, insbesondere C₁₂₋₁₈-Alkyl(hydroxyethyl)dimethylammoniumverbindungen, und vorzugsweise deren Halogenide, insbesondere Chloride, zum Einsatz. Ein erfindungsgemäßes Mittel enthält vorzugsweise 0,5 Gew.-% bis 25 Gew.-%, insbesondere 1 Gew.-% bis 15 Gew.-% kationisches Tensid.

Ein erfindungsgemäßes Mittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1,1-diphosphonsäure, polymere Hydroxyverbindungen wie Dextrin sowie polymere (Poly-)carbonsäuren, insbesondere durch Oxidation von Polysacchariden beziehungsweise Dextrinen zugänglichen Polycarboxylate, und/oder polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5 000 und 200 000, die der Copolymeren zwischen 2 000 und 200 000, vorzugsweise 50 000 bis 120 000, jeweils bezogen auf freie Säure. Ein besonders bevorzugtes Acrylsäure-Maleinsäure-Copolymer weist eine relative Molekülmasse von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder einem veresterten Vinylalkohol oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (methacrylsäure ab. Das zweite saure Monomer beziehungsweise dessen Salz kann ein Derivat einer C₄-C₈-Dicarbonsäure, wobei Maleinsäure besonders bevorzugt ist, und/oder ein Derivat einer Allylsulfonsäure, die in 2-Stellung mit einem Alkyl- oder Arylrest substituiert ist, sein. Derartige Polymere weisen im Allgemeinen eine relative Molekülmasse zwischen 1 000 und 200 000 auf. Weitere bevorzugte Copolymere sind solche, die als Monomere Acrolein und Acrylsäure/Acrylsäuresalze beziehungsweise Vinylacetat aufweisen. Die organischen Buildersubstanzen können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, erfindungsgemäßen Mitteln eingesetzt.

Als wasserlösliche anorganische Buildermaterialien kommen insbesondere polymere Alkaliphosphate, die in Form ihrer alkalischen neutralen oder sauren Natrium- oder Kaliumsalze vorliegen können, in Betracht. Beispiele hierfür sind Tetranatriumdiphosphat, Dinatriumdihydrogendiphosphat, Pentanatriumtriphosphat, sogenanntes Natriumhexametaphosphat sowie die entsprechenden Kaliumsalze beziehungsweise Gemische aus Natrium- und Kaliumsalzen. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen, das nach den Angaben der deutschen Patentschrift DE 24 12 837 bestimmt werden kann, liegt in der Regel im Bereich von 100 bis 200 mg CaO pro Gramm.

Geeignete Substitute beziehungsweise Teilsubstitute für das genannte Alumosilikat sind kristalline Alkalisilikate, die allein oder im Gemisch mit amorphen Silikaten vorliegen können. Die in den erfindungsgemäßen Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ · y H₂O eingesetzt, in der x, das sogenannte Modul, eine Zahl von 1,9 bis 4 und y eine Zahl von 0 bis 20 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl ß- als auch δ-Natriumdisilikate (Na₂Si₂O₅ · y H₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt, wie es n aus Sand und Soda hergestellt werden kann. Kristalline Natriumsilikate mit einem Modul im Bereich von 1,9 bis 3,5 werden in einer weiteren bevorzugten Ausführungsform erfindungsgemäßer Mittel eingesetzt. In einer bevorzugten Ausgestaltung erfindungsgemäßer Mittel setzt man ein granulares Compound aus Alkalisilikat und Alkalicarbonat ein, wie es zum Beispiel unter dem Namen Nabion® 15 im Handel erhältlich ist. Falls als zusätzliche Buildersubstanz auch Alkalialumosilikat, insbesondere Zeolith, vorhanden ist, beträgt das Gewichtsverhältnis Alumosilikat zu Silikat, jeweils bezogen auf wasserfreie Aktivsubstanzen, vorzugsweise 1:10 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Buildersubstanzen sind in den erfindungsgemäßen Wasch- oder Reinigungsmitteln vorzugsweise in Mengen bis zu 60 Gew.-%, insbesondere von 5 Gew.-% bis 40 Gew.-%, enthalten.

In einer bevorzugten Ausgestaltung der Erfindung weist ein erfindungsgemäßes Mittel einen wasserlöslichen Builderblock auf. Durch die Verwendung des Begriffes "Builderblock" soll hierbei ausgedrückt werden, dass die Mittel keine weiteren Buildersubstanzen enthalten als solche, die wasserlöslich sind, das heißt sämtliche in dem Mittel enthaltenen Buildersubstanzen sind in dem so charakterisierten "block" zusammengefasst, wobei allenfalls die Mengen an Stoffen ausgenommen sind, die als Verunreinigungen beziehungsweise stabilisierende Zusätze in geringen Mengen in den übrigen Inhaltsstoffen der Mittel handelsüblicherweise enthalten sein können. Unter dem Begriff "wasserlösliche" soll dabei verstanden werden, dass sich der Builderblock bei der Konzentration, die sich durch die Einsatzmenge des ihn enthaltenden Mittels bei den üblichen Bedingungen ergibt, rückstandsfrei löst. Vorzugsweise sind mindestens 15 Gew.-% und bis zu 55 Gew.-%, insbesondere 25 Gew.-% bis 50 Gew.-% an wasserlöslichem Builderblock in den erfindungsgemäßen Mitteln enthalten. Dieser setzt sich vorzugsweise zusammen aus den Komponenten
a) 5 Gew.-% bis 35 Gew.-% Citronensäure, Alkalicitrat und/oder Alkalicarbonat, welches auch zumindest anteilig durch Alkalihydrogencarbonat ersetzt sein kann,
b) bis zu 10 Gew.-% Alkalisilikat mit einem Modul im Bereich von 1,8 bis 2,5,
c) bis zu 2 Gew.-% Phosphonsäure und/oder Alkaliphosphonat,
d) bis zu 50 Gew.-% Alkaliphosphat, und
e) bis zu 10 Gew.-% polymerem Polycarboxylat,
wobei die Mengenangaben sich auf das gesamte Wasch- beziehungsweise Reinigungsmittel beziehen. Dies gilt auch für alle folgenden Mengenangaben, sofern nicht ausdrücklich anders angegeben.

In einer bevorzugten Ausführungsform erfindungsgemäßer Mittel enthält der wasserlösliche Builderblock mindestens 2 der Komponenten b), c), d) und e) in Mengen größer 0 Gew.-%.

Hinsichtlich der Komponente a) sind in einer bevorzugten Ausführungsform erfindungsgemäßer Mittel 15 Gew.-% bis 25 Gew.-% Alkalicarbonat, welches zumindest anteilig durch Alkalihydrogencarbonat ersetzt sein kann, und bis zu 5 Gew.-%, insbesondere 0,5 Gew.-% bis 2,5 Gew.-% Citronensäure und/oder Alkalicitrat enthalten. In einer alternativen Ausführungsform erfindungsgemäßer Mittel sind als Komponente a) 5 Gew.-% bis 25 Gew.-%, insbesondere 5 Gew.-% bis 15 Gew.-% Citronensäure und/oder Alkalicitrat und bis zu 5 Gew.-% , insbesondere 1 Gew.-% bis 5 Gew.-% Alkalicarbonat, welches zumindest anteilig durch Alkalihydrogencarbonat ersetzt sein kann, enthalten. Falls sowohl Alkalicarbonat wie auch Alkalihydrogencarbonat vorhanden sind, weist die Komponte a) Alkalicarbonat und Alkalihydrogencarbonat vorzugsweise im Gewichtsverhältnis von 10:1 bis 1:1 auf.

Hinsichtlich der Komponente b) sind in einer bevorzugten Ausführungsform erfindungsgemäßer Mittel 1 Gew.-% bis 5 Gew.-% Alkalisilikat mit einem Modul im Bereich von 1,8 bis 2,5 enthalten.

Hinsichtlich der Komponente c) sind in einer bevorzugten Ausführungsform erfindungsgemäßer Mittel 0,05 Gew.-% bis 1 Gew.-% Phosphonsäure und/oder Alkaliphosphonat enthalten. Unter Phosphonsäuren werden dabei auch gegebenenfalls substituierte Alkylphosphonsäuren verstanden, die auch mehrere Phosphonsäuregruppierungen aufweisen könne (sogenannte Polyphosphonsäuren). Bevorzugt werden sie ausgewählt aus den Hydroxy- und/oder Aminoalkylphosphonsäuren und/oder deren Alkalisalzen, wie zum Beispiel Dimethylaminomethandiphosphonsäure, 3-Aminopropan-1-hydroxy-1,1-diphosphonsäure, 1-Amino-1-phenyl-methandiphosphonsäure, 1-Hydroxyethan-1,1-diphosphonsäure, Amino-tris(methylenphosphonsäure), N,N,N',N'-Ethylendiamin-tetrakis(methylenphosphonsäure) und acylierte Derivate der phosphorigen Säure, die auch in beliebigen Mischungen eingesetzt werden können.

Hinsichtlich der Komponente d) sind in einer bevorzugten Ausführungsform erfindungsgemäßer Mittel 15 Gew.-% bis 35 Gew.-% Alkaliphosphat, insbesondere Trinatriumpolyphosphat, enthalten. Alkaliphosphat ist dabei die summarische Bezeichnung für die Alkalimetall- (insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen bzw. Kalkinkrustationen in Geweben und tragen überdies zur Reinigungsleistung bei. Natriumdihydrogenphosphat, NaH₂PO₄, existiert als Dihydrat (Dichte 1,91 gcm⁻³, Schmelzpunkt 60°) und als Monohydrat (Dichte 2,04 gcm⁻³). Beide Salze sind weiße, in Wasser sehr leicht lösliche Pulver, die beim Erhitzen das Kristallwasser verlieren und bei 200°C in das schwach saure Diphosphat (Dinatriumhydrogendiphosphat, Na₂H₂P₂O₇), bei höherer Temperatur in Natiumtrimetaphosphat (Na₃P₃O₉) und Madrellsches Salz übergehen. NaH₂PO₄ reagiert sauer; es entsteht, wenn Phosphorsäure mit Natronlauge auf einen pH-Wert von 4,5 eingestellt und die Maische versprüht wird. Kaliumdihydrogenphosphat (primäres oder einbasiges Kaliumphosphat, Kaliumbiphosphat, KDP), KH₂PO₄, ist ein weißes Salz der Dichte 2,33 gcm⁻³, hat einen Schmelzpunkt 253° (Zersetzung unter Bildung von (KPO₃)ₓ, Kaliumpolyphosphat) und ist leicht löslich in Wasser. Dinatriumhydrogenphosphat (sekundäres Natriumphosphat), Na₂HPO₄, ist ein farbloses, sehr leicht wasserlösliches kristallines Salz. Es existiert wasserfrei und mit 2 Mol. (Dichte 2,066 gcm⁻³, Wasserverlust bei 95°), 7 Mol. (Dichte 1,68 gcm⁻³, Schmelzpunkt 48° unter Verlust von 5 H₂O) und 12 Mol. Wasser (Dichte 1,52 gcm⁻³, Schmelzpunkt 35° unter Verlust von 5 H₂O), wird bei 100° wasserfrei und geht bei stärkerem Erhitzen in das Diphosphat Na₄P₂O₇ über. Dinatriumhydrogenphosphat wird durch Neutralisation von Phosphorsäure mit Sodalösung unter Verwendung von Phenolphthalein als Indikator hergestellt. Dikaliumhydrogenphosphat (sekundäres od. zweibasiges Kaliumphosphat), K₂HPO₄, ist ein amorphes, weißes Salz, das in Wasser leicht löslich ist. Trinatriumphosphat, tertiäres Natriumphosphat, Na₃PO₄, sind farblose Kristalle, die als Dodecahydrat eine Dichte von 1,62 gcm⁻³ und einen Schmelzpunkt von 73-76°C (Zersetzung), als Decahydrat (entsprechend 19-20% P₂O₅) einen Schmelzpunkt von 100°C und in wasserfreier Form (entsprechend 39-40% P₂O₅) eine Dichte von 2,536 gcm⁻³ aufweisen. Trinatriumphosphat ist in Wasser unter alkalischer Reaktion leicht löslich und wird durch Eindampfen einer Lösung aus genau 1 Mol Dinatriumphosphat und 1 Mol NaOH hergestellt. Trikaliumphosphat (tertiäres oder dreibasiges Kaliumphosphat), K₃PO₄, ist ein weißes, zerfließliches, körniges Pulver der Dichte 2,56 gcm⁻³, hat einen Schmelzpunkt von 1340° und ist in Wasser mit alkalischer Reaktion leicht löslich. Es entsteht z.B. beim Erhitzen von Thomasschlacke mit Kohle und Kaliumsulfat. Trotz des höheren Preises werden in der Reinigungsmittel-Industrie die leichter löslichen, daher hochwirksamen, Kaliumphosphate gegenüber entsprechenden Natrium-Verbindungen vielfach bevorzugt. Tetranatriumdiphosphat (Natriumpyrophosphat), Na₄P₂O₇, existiert in wasserfreier Form (Dichte 2,534 gcm⁻³, Schmelzpunkt 988°, auch 880° angegeben) und als Decahydrat (Dichte 1,815-1,836 gcm⁻³, Schmelzpunkt 94° unter Wasserverlust). Bei Substanzen sind farblose, in Wasser mit alkalischer Reaktion lösliche Kristalle. Na₄P₂O₇ entsteht beim Erhitzen von Dinatriumphosphat auf >200° oder indem man Phosphorsäure mit Soda im stöchiometrischem Verhältnis umsetzt und die Lösung durch Versprühen entwässert. Das Decahydrat komplexiert Schwermetall-Salze und Härtebildner und verringert daher die Härte des Wassers. Kaliumdiphosphat (Kaliumpyrophosphat), K₄P₂O₇, existiert in Form des Trihydrats und stellt ein farbloses, hygroskopisches Pulver mit der Dichte 2,33 gcm⁻³dar, das in Wasser löslich ist, wobei der pH-Wert der 1%igen Lösung bei 25° 10,4 beträgt. Durch Kondensation des NaH₂PO₄ bzw. des KH₂PO₄ entstehen höhermol. Natrium- und Kaliumphosphate, bei denen man cyclische Vertreter, die Natrium- bzw. Kaliummetaphosphate und kettenförmige Typen, die Natrium- bzw. Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Madrellsches Salz. Alle höheren Natrium- und Kaliumphosphate werden gemeinsam als kondensierte Phosphate bezeichnet. Das technisch wichtige Pentanatriumtriphosphat, Na₅P₃O₁₀ (Natriumtripolyphosphat), ist ein wasserfrei oder mit 6 H₂O kristallisierendes, nicht hygroskopisches, weißes, wasserlösliches Salz der allgemeinen Formel NaO-[P(O)(ONa)-O]ₙ-Na mit n=3. In 100 g Wasser lösen sich bei Zimmertemperatur etwa 17 g, bei 60° ca. 20 g, bei 100° rund 32 g des kristallwasserfreien Salzes; nach zweistündigem Erhitzen der Lösung auf 100° entstehen durch Hydrolyse etwa 8% Orthophosphat und 15% Diphosphat. Bei der Herstellung von Pentanatriumtriphosphat wird Phosphorsäure mit Sodalösung oder Natronlauge im stöchiometrischen Verhältnis zur Reaktion gebracht und die Lsg. durch Versprühen entwässert.

Ähnlich wie Grahamsches Salz und Natriumdiphosphat löst Pentanatriumtriphosphat viele unlösliche Metall-Verbindungen (auch Kalkseifen usw.). Pentakaliumtriphosphat, K₅P₃O₁₀ (Kaliumtripolyphosphat), kommt beispielsweise in Form einer 50 Gew.-%-igen Lösung (> 23% P₂O₅, 25% K₂O) in den Handel. Die Kaliumpolyphosphate finden in der Wasch- und Reinigungsmittel-Industrie breite Verwendung. Weiter existieren auch Natriumkaliumtripolyphosphate, welche ebenfalls im Rahmen der vorliegenden Erfindung einsetzbar sind. Diese entstehen beispielsweise, wenn man Natriumtrimetaphosphat mit KOH hydrolysiert:

(NaPO₃)₃ + 2 KOH → Na₃K₂P₃O₁₀ + H₂O

Diese sind erfindungsgemäß genau wie Natriumtripolyphosphat, Kaliumtripolyphosphat oder Mischungen aus diesen beiden einsetzbar; auch Mischungen aus Natriumtripolyphosphat und Natriumkaliumtripolyphosphat oder Mischungen aus Kaliumtripolyphosphat und Natriumkaliumtripolyphosphat oder Gemische aus Natriumtripolyphosphat und Kaliumtripolyphosphat und Natriumkaliumtripolyphosphat sind erfindungsgemäß einsetzbar.

Hinsichtlich der Komponente e) sind in einer bevorzugten Ausführungsform erfindungsgemäßer Mittel 1,5 Gew.-% bis 5 Gew.-% polymeres Polycarboxylat, insbesondere ausgewählt aus den Polymerisations- beziehungsweise Copolymerisationsprodukten von Acrylsäure, Methacrylsäure und/oder Maleinsäure enthalten. Unter diesen sind die Homopolymere der Acrylsäure und unter diesen wiederum solche mit einer mittleren Molmasse im Bereich von 5 000 D bis 15 000 D (PA-Standard) besonders bevorzugt.

Als in den Mitteln verwendbare Enzyme kommen außer der obengenannten Oxidase solche aus der Klasse der Proteasen, Lipasen, Cutinasen, Amylasen, Pullulanasen, Mannanasen, Cellulasen, Hemicellulasen, Xylanasen und Peroxidasen sowie deren Gemische in Frage, beispielsweise Proteasen wie BLAP®, Optimase®, Opticlean®, Maxacal®, Maxapem®, Alcalase®, Esperase®, Savinase®, Durazym® und/oder Purafect® OxP, Amylasen wie Termamyl®, Amylase-LT®, Maxamyl®, Duramyl® und/oder Purafect® OxAm, Lipasen wie Lipolase®, Lipomax®, Lumafast® und/oder Lipozym®, Cellulasen wie Celluzyme® und/oder Carezyme®. Besonders geeignet sind aus Pilzen oder Bakterien, wie Bacillus subtilis, Bacillus licheniformis, Streptomyces griseus, Humicola lanuginosa, Humicola insolens, Pseudomonas pseudoalcaligenes oder Pseudomonas cepacia gewonnene enzymatische Wirkstoffe. Die gegebenenfalls verwendeten Enzyme können an Trägerstoffen adsorbiert und/oder in Hüllsubstanzen eingebettet sein, um sie gegen vorzeitige Inaktivierung zu schützen. Sie sind in den erfindungsgemäßen Wasch-, Reinigungs- und Desinfektionsmitteln vorzugsweise in Mengen bis zu 10 Gew.-%, insbesondere von 0,2 Gew.-% bis 2 Gew.-%, enthalten, wobei besonders bevorzugt gegen oxidativen Abbau stabilisierte Enzyme eingesetzt werden.

In einer bevorzugten Ausführungsform der Erfindung enthält das Mittel 5 Gew.-% bis 50 Gew.-%, insbesondere 8 - 30 Gew.-% anionisches und/oder nichtionisches Tensid, bis zu 60 Gew.-%, insbesondere 5 - 40 Gew.-% Buildersubstanz und 0,2 Gew.-% bis 2 Gew.-% Enzym, ausgewählt aus den Proteasen, Lipasen, Cutinasen, Amylasen, Pullulanasen, Mannanasen, Cellulasen, Oxidasen und Peroxidasen sowie deren Gemischen.

Zu den in den erfindungsgemäßen Mitteln, insbesondere wenn sie in flüssiger oder pastöser Form vorliegen, verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den erfindungsgemäßen Waschmitteln vorzugsweise nicht über 30 Gew.-%, insbesondere von 6 Gew.-% bis 20 Gew.-%, vorhanden.

Zur Einstellung eines gewünschten, sich durch die Mischung der übrigen Komponenten nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den erfindungsgemäßen Mitteln vorzugsweise nicht über 20 Gew.-%, insbesondere von 1,2 Gew.-% bis 17 Gew.-%, enthalten.

Schmutzablösevermögende Polymere, die oft als "Soil Release"-Wirkstoffe oder wegen ihres Vermögens, die behandelte Oberfläche, zum Beispiel der Faser, schmutzabstoßend auszurüsten, als "Soil Repellents" bezeichnet werden, sind beispielsweise nichtionische oder kationische Cellulosederivate. Zu den insbesondere polyesteraktiven schmutzablösevermögenden Polymeren gehören Copolyester aus Dicarbonsäuren, beispielsweise Adipinsäure, Phthalsäure oder Terephthalsäure, Diolen, beispielsweise Ethylenglykol oder Propylenglykol, und Polydiolen, beispielsweise Polyethylenglykol oder Polypropylenglykol. Zu den bevorzugt eingesetzten schmutzablösevermögenden Polyestern gehören solche Verbindungen, die formal durch Veresterung zweier Monomerteile zugänglich sind, wobei das erste Monomer eine Dicarbonsäure HOOC-Ph-COOH und das zweite Monomer ein Diol HO-(CHR¹¹-)ₐOH, das auch als polymeres Diol H-(O-(CHR₁₁-)ₐ)_{b}OH vorliegen kann, ist. Darin bedeutet Ph einen o-, m- oder p-Phenylenrest, der 1 bis 4 Substituenten, ausgewählt aus Alkylresten mit 1 bis 22 C-Atomen, Sulfonsäuregruppen, Carboxylgruppen und deren Mischungen, tragen kann, R¹¹ Wasserstoff, einen Alkylrest mit 1 bis 22 C-Atomen und deren Mischungen, a eine Zahl von 2 bis 6 und b eine Zahl von 1 bis 300. Vorzugsweise liegen in den aus diesen erhältlichen Polyestern sowohl Monomerdioleinheiten -O-(CHR₁₁-)ₐO- als auch Polymerdioleinheiten -(O-(CHR¹¹-)ₐ)_{b}O- vor. Das molare Verhältnis von Monomerdioleinheiten zu Polymerdioleinheiten beträgt vorzugsweise 100:1 bis 1:100, insbesondere 10:1 bis 1:10. In den Polymerdioleinheiten liegt der Polymerisationsgrad b vorzugsweise im Bereich von 4 bis 200, insbesondere von 12 bis 140. Das Molekulargewicht beziehungsweise das mittlere Molekulargewicht oder das Maximum der Molekulargewichtsverteilung bevorzugter schmutzablösevermögender Polyester liegt im Bereich von 250 bis 100 000, insbesondere von 500 bis 50 000. Die dem Rest Ph zugrundeliegende Säure wird vorzugsweise aus Terephtalsäure, Isophthalsäure, Phthalsäure, Trimellithsäure, Mellithsäure, den Isomeren der Sulfophthalsäure, Sulfoisophthalsäure und Sulfoterephtalsäure sowie deren Gemischen ausgewählt. Sofern deren Säuregruppen nicht Teil der Esterbindungen im Polymer sind, liegen sie vorzugsweise in Salzform, insbesondere als Alkali- oder Ammoniumsalz vor. Unter diesen sind die Natrium- und Kaliumsalze besonders bevorzugt. Gewünschtenfalls können statt des Monomers HOOC-Ph-COOH geringe Anteile, insbesondere nicht mehr als 10 Mol-% bezogen auf den Anteil an Ph mit der oben gegebenen Bedeutung, anderer Säuren, die mindestens zwei Carboxylgruppen aufweisen, im schmutzablösevermögenden Polyester enthalten sein. Zu diesen gehören beispielsweise Alkylen- und Alkenylendicarbonsäuren wie Malonsäure, Bernsteinsäure, Fumarsäure, Maleinsäure, Glutarsäure, Adipinsäure, Pimelinsäure, Korksäure, Azelainsäure und Sebacinsäure. Zu den bevorzugten Diolen HO-(CHR¹¹-)ₐOH gehören solche, in denen R¹¹ Wasserstoff und a eine Zahl von 2 bis 6 ist, und solche, in denen a den Wert 2 aufweist und R¹¹ unter Wasserstoff und den Alkylresten mit 1 bis 10, insbesondere 1 bis 3 C-Atomen ausgewählt wird. Unter den letztgenannten Diolen sind solche der Formel HO-CH₂-CHR¹¹-OH, in der R¹¹ die obengenannte Bedeutung besitzt, besonders bevorzugt. Beispiele für Diolkomponenten sind Ethylenglykol, 1,2-Propylenglykol, 1,3-Propylenglykol, 1,4-Butandiol, 1,5-Pentandiol, 1,6-Hexandiol, 1,8-Octandiol, 1,2-Decandiol, 1,2-Dodecandiol und Neopentylglykol. Besonders bevorzugt unter den polymeren Diolen ist Polyethylenglykol mit einer mittleren Molmasse im Bereich von 1000 bis 6000. Gewünschtenfalls können diese Polyester auch endgruppenverschlossen sein, wobei als Endgruppen Alkylgruppen mit 1 bis 22 C-Atomen und Ester von Monocarbonsäuren in Frage kommen. Den über Esterbindungen gebundenen Endgruppen können Alkyl-, Alkenyl- und Arylmonocarbonsäuren mit 5 bis 32 C-Atomen, insbesondere 5 bis 18 C-Atomen, zugrundeliegen. Zu diesen gehören Valeriansäure, Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure, Benzoesäure, die 1 bis 5 Substituenten mit insgesamt bis zu 25 C-Atomen, insbesondere 1 bis 12 C-Atomen tragen kann, beispielsweise tert.-Butylbenzoesäure. Den Endgruppen können auch Hydroxymonocarbonsäuren mit 5 bis 22 C-Atomen zugrundeliegen, zu denen beispielsweise Hydroxyvaleriansäure, Hydroxycapronsäure, Ricinolsäure, deren Hydrierungsprodukt Hydroxystearinsäure sowie o-, m- und p-Hydroxybenzoesäure gehören. Die Hydroxymonocarbonsäuren können ihrerseits über ihre Hydroxylgruppe und ihre Carboxylgruppe miteinander verbunden sein und damit mehrfach in einer Endgruppe vorliegen. Vorzugsweise liegt die Anzahl der Hydroxymonocarbonsäureeinheiten pro Endgruppe, das heißt ihr Oligomerisierungsgrad, im Bereich von 1 bis 50, insbesondere von 1 bis 10. In einer bevorzugten Ausgestaltung der Erfindung werden Polymere aus Ethylenterephthalat und Polyethylenoxid-terephthalat, in denen die Polyethylenglykol-Einheiten Molgewichte von 750 bis 5000 aufweisen und das Molverhältnis von Ethylenterephthalat zu Polyethylenoxid-terephthalat 50:50 bis 90:10 beträgt, allein oder in Kombination mit Cellulosederivaten verwendet.

Zu den für den Einsatz in erfindungsgemäßen Mitteln für die Wäsche von Textilien in Frage kommenden Farbübertragungsinhibitoren gehören insbesondere Polyvinylpyrrolidone, Polyvinylimidazole, polymere N-Oxide wie Poly-(vinylpyridin-N-oxid) und Copolymere von Vinylpyrrolidon mit Vinylimidazol und gegebenenfalls weiteren Monomeren.

Die erfindungsgemäßen Mittel zum Einsatz in der Textilwäsche können Knitterschutzmittel enthalten, da textile Flächengebilde, insbesondere aus Reyon, Wolle, Baumwolle und deren Mischungen, zum Knittern neigen können, weil die Einzelfasern gegen Durchbiegen, Knicken, Pressen und Quetschen quer zur Faserrichtung empfindlich sind. Hierzu zählen beispielsweise synthetische Produkte auf der Basis von Fettsäuren, Fettsäureestern, Fettsäureamiden, -alkylolestern, -alkylolamiden oder Fettalkoholen, die meist mit Ethylenoxid umgesetzt sind, oder Produkte auf der Basis von Lecithin oder modifizierter Phosphorsäureester.

Vergrauungsinhibitoren haben die Aufgabe, den von der harten Oberfläche und insbesondere von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Die Waschmittel können optische Aufheller, unter diesen insbesondere Derivate der Diaminostilbendisulfonsäure beziehungsweise deren Alkalimetallsalze, enthalten. Geeignet sind zum Beispiel Salze der 4,4'-Bis(2-anilino-4-morpholino-1,3,5-triazinyl-6-amino)stilben-2,2'-disuffonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

Insbesondere beim Einsatz in maschinellen Wasch- beziehungsweise Reinigungsverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bisfettsäurealkylendiamiden. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche beziehungsweise dispergierbare Trägersubstanz gebunden. Insbesondere sind dabei Mischungen aus Paraffinen und Bistearylethylendiamid bevorzugt.

In erfindungsgemäßen Mitteln können außerdem Wirkstoffe zur Vermeidung des Anlaufens von Gegenständen aus Silber, sogenannte Silberkorrosionsinhibitoren, eingesetzt werden. Bevorzugte Silberkorrosionsschutzmittel sind organische Disulfide, zweiwertige Phenole, dreiwertige Phenole, gegebenenfalls alkyl- oder aminoalkylsubstituierte Triazole wie Benzotriazol sowie Cobalt-, Mangan-, Titan-, Zirkonium-, Hafnium-, Vanadium- oder Cersalze und/oder -komplexe, in denen die genannten Metalle in einer der Oxidationsstufen II, III, IV, V oder VI vorliegen.

Das durch sphärische Polyelektrolyt-Bürsten (SPB) stabilisierte nanopartikuläre MnO₂ kann in Form von Pulver oder als Granulat, die auch gegebenenfalls gecoatet und/oder gefärbt sein können und übliche Trägermaterialien und/oder Granulationshiffsmittel enthalten können, vorliegen. Im Fall des Einsatzes als Granulat kann dieses gewünschtenfalls auch weitere Aktivstoffe, insbesondere Bleichaktivator, enthalten.

Die Herstellung erfindungsgemäßer fester Mittel bietet keine Schwierigkeiten und kann in im Prinzip bekannter Weise, zum Beispiel durch Sprühtrocknen oder Granulation, erfolgen, wobei Persauerstoffverbindung und bleichverstärkender Wirkstoff gegebenenfalls später zugesetzt werden. Zur Herstellung erfindungsgemäßer Mittel mit erhöhtem Schüttgewicht, insbesondere im Bereich von 650 g/l bis 950 g/l, ist ein einen Extrusionschritt aufweisendes Verfahren bevorzugt. Erfindungsgemäße Wasch-, Reinigungs- oder Desinfektionsmittel in Form wässriger oder sonstige übliche Lösungsmittel enthaltender Lösungen werden besonders vorteilhaft durch einfaches Mischen der Inhaltsstoffe, die in Substanz oder als Lösung in einen automatischen Mischer gegeben werden können, hergestellt. In einer bevorzugten Ausführung von Mitteln für die insbesondere maschinelle Reinigung von Geschirr sind diese tablettenförmig.

### Beispiele

Ammonium-funktionalisierte sphärische Polyelektrolyt-Bürsten (SPB) mit Polystyrolkern und darauf aufgepfropftem 2-Trimethylammoniumethyl-methacrylat wurden wie von G. Sharma und M. Ballauff in Macromol. Rapid Commun., 24, 2004, S. 547-552 beschrieben, hergestellt. Eine wässrige Disperson eines so hergestellten SPB wurde mit Wasser auf einen Feststoffgehalt von 1 Gew.-% verdünnt. Definierte Mengen an Kaliumpermanganat in wässriger Lösung wurden unter Rühren bei in der nachfolgenden Tabelle 1 angegebenen Temperatur und pH 5 innerhalb von 30 Minuten bei in dieser Tabelle angegebenen Zugabegeschwindigkeiten (in ml/h) der Mischung mit Hilfe einer Spritzenpumpe zugesetzt; das Molverhältnis zwischen der Anzahl funktioneller Gruppen in der Polyelektrolyt-Hülle zu zugefügtem KMnO₄ ist in Tabelle 1 ebenfalls angegeben. Die Mischung wurde 24 Stunden lang gerührt. Die resultierende wässrige Partikelsuspension wurde durch Ultrafiltration gereinigt. In Tabelle 1 ist auch der Gehalt an MnO₂ im jeweiligen Kompositpartikel (in Gew.-%, bezogen auf das feste Kompositpartikel) angegeben.

**Tabelle 1: Charakterisierung von SPB-MnO₂-Kompositpartikeln M1 bis M5**

| | Molverhältnis | Zugabegeschwindigkeit | Temperatur | MnO₂-Gehalt |
|---|---|---|---|---|
| M1 | 2:1 | 40 | Raumtemperatur | 3,15 |
| M2 | 2:1 | 3600 | Raumtemperatur | 3,08 |
| M3 | 1:1 | 40 | Raumtemperatur | 4,90 |
| M4 | 2:3 | 40 | Raumtemperatur | 6,46 |
| M5 | 1:1 | 40 | 90 °C | 5,79 |

Die Bleichleistung wurde in einem miniaturisierten Waschtest getestet. Es wurde mit einer vereinfachten Waschlauge bestehend aus wässrigem H₂O₂ und SPB-MnO₂-Kompositpartikel gearbeitet. Zum Einsatz kamen Mischungen von 0,35 g/l H₂O₂ und SPB-MnO₂-Kompositpartikel M1 in einer Menge, die 1 mg/ml Mn entspricht, in Wasser der Härte 16°dH, deren pH-Werte mittels NaOH auf pH 10,5 eingestellt worden waren. Zum Vergleich wurde eine Lösung, der das SPB-MnO₂-Kompositpartikel fehlte, ebenfalls getestet.

Für die Messung der Bleichleistung wurden Baumwollsubstrate, die mit standardisierten Teeanschmutzungen versehen worden war, 30 Minuten bei 20 °C beziehungsweise 30 °C in den jeweiligen Lösungen behandelt. Das behandelte Stoffsubstrat wurde unter fließendem Wasser ausgewaschen und anschließend getrocknet und farbvermessen. In der nachfolgenden Tabelle 2 ist der Helligkeitswert der Baumwollmeßstücke angegeben. Man erkennt, dass sich bei Einsatz des SPB-MnO₂-Kompositpartikels eine stärkere Bleichleistung ergibt als bei allein H₂O₂. Dies trifft auch zu, wenn statt M1 einer der übrigen SPB-MnO₂-Kompositpartikeln M2, M3, M4 oder M5 eingesetzt wurde.

**Tabelle 2**

| | Bleichleistung [Y-Wert], 20 °C | Bleichleistung [Y-Wert], 30 °C |
|---|---|---|
| H₂O₂ | 51,1 | 53,1 |
| H₂O₂ + SPB-MnO₂-Kompositpartikel M1 | 52,5 | 54,1 |

## Patentansprüche

1. Verfahren zur Herstellung von sphärischen Polyelektrolyt-Bürsten (SPB), die nanopartikuläres MnO₂ kolloidal gebunden enthalten, wobei man Mangan in einer höheren Oxidationsstufe als +IV in wässriger Lösung mit einer ammonium-funktionalisierten sphärischen Polyelektrolyt-Bürste (SPB) in Kontakt bringt.

2. Verfahren nach Anspruch 1, **dadurch gekennzeichnet, dass** das höher oxidierte Mangan in Form eines MnO₄-Anions mit üblichen Gegenkationen wie K oder Na vorliegt.

3. Verfahren nach Anspruch 1 oder 2, **dadurch gekennzeichnet, dass** das Molverhältnis zwischen der Anzahl funktioneller Gruppen in der Polyelektrolyt-Hülle zu zugefügtem Mn im Bereich von 100:1 bis 2:3, insbesondere im Bereich von 2:1 bis 1:1 liegt.

4. Verfahren nach einem der Ansprüche 1 bis 3, **dadurch gekennzeichnet, dass** man es bei Temperaturen im Bereich von 10 °C bis 70 °C, insbesondere von 20 °C bis 25 °C durchführt.

5. Verwendung von sphärischen Polyelektrolyt-Bürsten (SPB) zur Stabilisierung von nanopartikulärem MnO₂.

6. Durch sphärische Polyelektrolyt-Bürsten (SPB) stabilisiertes nanopartikuläres MnO₂.

7. MnO₂ nach Anspruch 6, **dadurch gekennzeichnet, dass** es als drahtförmige MnO₂-Nanopartikel mit Längen im Bereich von 5 nm bis 30 nm vorliegt.

8. Verwendung von durch sphärische Polyelektrolyt-Bürsten (SPB) stabilisiertem nanopartikulärem MnO₂ als Katalysator in Oxidationsreaktionen.

9. Verwendung von durch sphärische Polyelektrolyt-Bürsten (SPB) stabilisiertem nanopartikulärem MnO₂ zur Verstärkung der Reinigungsleistung von Wasch- oder Reinigungsmitteln in wässriger, insbesondere tensidhaltiger Flotte.

10. Wasch- oder Reinigungsmittel, **dadurch gekennzeichnet, dass** es durch sphärische Polyelektrolyt-Bürsten (SPB) stabilisiertes nanopartikuläres MnO₂ neben üblichen damit verträglichen Inhaltsstoffen enthält.

11. Mittel nach Anspruch 10, **dadurch gekennzeichnet, dass** es 0,001 Gew.-% bis 2 Gew.-%, insbesondere 0,01 Gew.-% bis 1 Gew.-% durch SPB stabilisiertes nanopartikuläres MnO₂ enthält.

12. Mittel nach Anspruch 10 oder 11, **dadurch gekennzeichnet, dass** es Persauerstoffverbindungen in Mengen von bis zu 50 Gew.-%, insbesondere von 5 Gew.-% bis 30 Gew.-% enthält.

13. Verfahren zum Waschen von Textilien unter Einsatz von durch sphärische Polyelektrolyt-Bürsten (SPB) stabilisiertem nanopartikulärem MnO₂.

14. Verfahren zum Reinigen harter Oberflächen unter Einsatz von durch sphärische Polyelektrolyt-Bürsten (SPB) stabilisiertem nanopartikulärem MnO₂.

15. Verfahren nach Anspruch 13 oder 14, **dadurch gekennzeichnet, dass** die Konzentration des durch SPB stabilisierten nanopartikulären MnO₂ (berechnet als Mn) in der wässrigen Waschbeziehungsweise Reinigungsflotte 0,1 µmol/l bis 100 µmol/l, insbesondere 0,5 µmol/l bis 90 µmol/l beträgt.

## Claims

1. A method for producing spherical polyelectrolyte brushes (SPB) which contain colloidally bound nanoparticulate MnO₂, wherein manganese in a higher oxidation state than +IV is brought into contact in aqueous solution with an ammonium-functionalized spherical polyelectrolyte brush (SPB).

2. The method according to claim 1, wherein the more highly oxidized manganese is present in the form of an ManO₄ anion with conventional countercations such as K or Na.

3. The method according to claim 1 or claim 2, wherein the molar ratio of the number of functional groups in the polyelectrolyte shell to added Mn is in the range from 100:1 to 2:3, in particular in the range from 2:1 to 1:1.

4. The method according to any one of claims 1 to 3, wherein it is performed at temperatures in the range from 10°C to 70°C, in particular from 20°C to 25°C.

5. Use of spherical polyelectrolyte brushes (SPB) for stabilizing nanoparticulate MnO₂.

6. Nanoparticulate MnO₂ stabilized by spherical polyelectrolyte brushes (SPB).

7. MnO₂ according to claim 6, wherein it is present as wire-like MnO₂ nanoparticles with a length in the range from 5 nm to 30 nm.

8. Use of nanoparticulate MnO₂ stabilized by spherical polyelectrolyte brushes (SPB) as a catalyst in oxidation reactions.

9. Use of nanoparticulate MnO₂ stabilized by spherical polyelectrolyte brushes (SPB) for enhancing the cleaning performance of washing or cleaning agents in an aqueous, in particular surfactant-containing liquor.

10. A washing or cleaning agent, wherein it contains nanoparticulate MnO₂ stabilized by spherical polyelectrolyte brushes (SPB) in addition to conventional ingredients compatible therewith.

11. The agent according to claim 10, wherein it contains 0.001 wt.% to 2 wt.%, in particular 0.01 wt.% to 1 wt.%, of nanoparticulate MnO₂ stabilized by SPB.

12. The agent according to claim 10 or claim 11, wherein it contains peroxy compounds in quantities of up to 50 wt.%, in particular of 5 wt.% to 30 wt.%.

13. A method for washing textiles using nanoparticulate MnO₂ stabilized by spherical polyelectrolyte brushes (SPB).

14. A method for cleaning hard surfaces using nanoparticulate MnO₂ stabilized by spherical polyelectrolyte brushes (SPB).

15. The method according to claim 13 or claim 14, wherein the concentration of the nanoparticulate MnO₂ stabilized by SPB (calculated as Mn) in the aqueous washing or cleaning liquor amounts to 0.1 µmol/l to 100 µmol/l, in particular 0.5 µmol/l to 90 µmol/l.

## Revendications

1. Procédé de fabrication de brosses de polyélectrolytes sphériques (SPB) contenant du MnO₂ nanoparticulaire en liaison colloïdale, dans lequel on met en contact, en solution aqueuse, du manganèse dont le nombre d'oxydation est supérieur à +IV avec une brosse de polyélectrolytes sphérique (SPB) pourvue de groupes fonctionnels ammonium.

2. Procédé selon la revendication 1, **caractérisé en ce que** le manganèse ayant un état d'oxydation plus élevé se présente sous forme d'un anion MnO₄ associé à des contre-cations habituels tels que K ou Na.

3. Procédé selon la revendication 1 ou 2, **caractérisé en ce que** le rapport molaire entre le nombre de groupes fonctionnels dans l'enveloppe de polyélectrolytes et le Mn ajouté est compris entre 100:1 et 2:3, en particulier compris entre 2:1 et 1:1.

4. Procédé selon l'une des revendications 1 à 3, **caractérisé en ce qu'**il est mis en oeuvre à des températures comprises entre 10 °C et 70 °C, en particulier entre 20 °C et 25 °C.

5. Utilisation de brosses de polyélectrolytes sphériques (SPB) pour stabiliser du MnO₂ nanoparticulaire.

6. MnO₂ nanoparticulaire, stabilisé par des brosses de polyélectrolytes sphériques (SPB).

7. MnO₂ selon la revendication 6, **caractérisé en ce qu'**il se présente sous forme de nanoparticules de MnO₂ filiformes dont la longueur est comprise entre 5 nm et 30 nm.

8. Utilisation de MnO₂ nanoparticulaire, stabilisé par des brosses de polyélectrolytes sphériques (SPB), en tant que catalyseur dans des réactions d'oxydation.

9. Utilisation de MnO₂ nanoparticulaire, stabilisé par des brosses de polyélectrolytes sphériques (SPB), pour renforcer le pouvoir nettoyant d'agents de lavage ou de nettoyage dans un bain aqueux contenant en particulier des agents tensioactifs.

10. Agent de lavage ou de nettoyage, **caractérisé en ce qu'**il contient du MnO₂ nanoparticulaire stabilisé par des brosses de polyélectrolytes sphériques (SPB) outre des ingrédients habituels compatibles avec celui-ci.

11. Agent selon la revendication 10, **caractérisé en ce qu'**il contient 0,001 % en poids à 2 % en poids, en particulier 0,01 % en poids à 1 % en poids, de MnO₂ nanoparticulaire stabilisé par des SPB.

12. Agent selon la revendication 10 ou 11, **caractérisé en ce qu'**il contient des composés peroxygénés dans une quantité inférieure ou égale à 50 % en poids, notamment comprise entre 5 % en poids et 30 % en poids.

13. Procédé de lavage de textiles impliquant la mise en oeuvre de MnO₂ nanoparticulaire stabilisé par des brosses de polyélectrolytes sphériques (SPB).

14. Procédé de nettoyage de surfaces dures impliquant la mise en oeuvre de MnO₂ nanoparticulaire stabilisé par des brosses de polyélectrolytes sphériques (SPB).

15. Procédé selon la revendication 13 ou 14, **caractérisé en ce que** la concentration du MnO₂ nanoparticulaire stabilisé par des SPB (calculée sous forme de Mn) dans le bain aqueux de lavage ou de nettoyage est comprise entre 0,1 µmol/L à 100 µmol/L, en particulier entre 0,5 µmol/L et 90 µmol/L.
